(19) Europäisches Patentamt
European Patent Office
Office européen des brevets

(11) **EP 4 742 097 A1**

(12) **EUROPEAN PATENT APPLICATION**

(43) Date of publication:
**13.05.2026  Bulletin 2026/20**

(51) International Patent Classification (IPC):
***G06N 3/045*** (2023.01)

(21) Application number: **24211437.9**

(22) Date of filing: **07.11.2024**

(52) Cooperative Patent Classification (CPC):
**G06N 3/045; G06N 3/042;** G06N 3/088; G06N 3/09

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Siemens Aktiengesellschaft
80333 München (DE)**

(72) Inventor: **Awais, Muhammad Usman
54000 Lahore (PK)**

(74) Representative: **Siemens Patent Attorneys
Postfach 22 16 34
80506 München (DE)**

(54) **COMPUTER-IMPLEMENTED METHOD AND DEVICE FOR ACCESSING DATA REGARDING A COMPLEX SYSTEM**

(57)     Modern chatbots and so-called co-pilots (software systems that performs a task in interaction with a user) can assist in a wide range of tasks, from explaining the workings of a machine to answering queries to providing troubleshooting recommendations, and even generating code for specialized industrial devices.

However, the repetitive invocation of LLM requests for function evaluation and planning also poses challenges: regarding Time and Money: the cost of token generation by the LLM is quite high, repetitive invocation implies higher expenditures.

The presented invention solves the problem mentioned by developing a strategy that focuses on two key aspects.
• The first aspect involves the storage of previous experiences and observations in a way that it becomes a knowledge base, so much so, that conclusions can be drawn solely from the knowledge base without even contacting the LLM.
• The second aspect is the implementation of an algorithm that utilizes the knowledge base and the LLM to fulfill user instructions and explore new actions.

This dual-pronged approach ensures that the system is both reactive, in that it can respond to immediate user instructions based on past experiences, and proactive, in that it can explore new actions that may not have been explicitly instructed by the user. In the following sections, both aspects are discussed in detail, explaining how they contribute to the overall functionality of the solution.

FIG 2

## Description

Artificial Intelligence AI is a transformative technology with the potential to revolutionize industries. In the industrial sector, AI is driving increased efficiency, productivity, and innovation across areas like process optimization, predictive maintenance, and quality control. AI can analyze industrial data to identify patterns and opportunities for improvement, enabling fine-tuning of operations. AI-powered systems can predict equipment maintenance needs and automate quality inspections, improving reliability and reducing costs. As AI capabilities advance, its integration into industrial operations is expected to grow, boosting competitiveness and innovation.

The recent advancements in Generative AI have significantly transformed the development of agents, chatbots, and co-pilots. The introduction of Large Language Models (LLM) models like the very popular GPT-3 and GPT-4, BERT or LLaMA have enabled these systems to generate human-like text based on the input they receive. This has resulted in more natural and engaging conversations, as these advanced models can understand the context and generate new content.

Modern autonomous agents can now leverage the use of LLMs to interact with the environment in natural language. In recent times, companies that focuses on developing these Large Language Models (LLM) started partnering also with robotic companies to create robots that can interact with the environment, perform tasks using its robotic hands, and talk to a human being simultaneously.

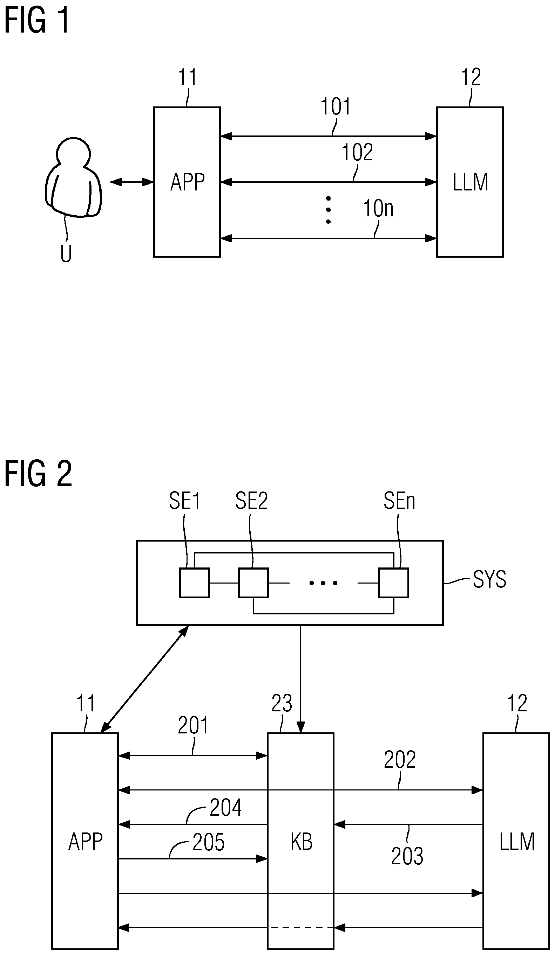

Figure 1 shows the situation as described as state of the art: on the left-hand side there is an application APP, 11, that might be used by a user (this could be a person or any technical system, depending on the use case). On the other side, there is the LLM, 12, which is questioned several times, 101, 102, ... 10n. The multiple disadvantages of this setting are explained below.

Similarly, modern chatbots and so-called co-pilots (software systems that performs a task in interaction with a user) can now assist in a wide range of tasks, from explaining the workings of a machine to answering queries to providing troubleshooting recommendations, and even generating code for specialized industrial devices.

However, the repetitive invocation of LLM requests for function evaluation and planning also poses challenges:

- Time: most LLMs take some time to generate tokens, which causes delays in preparing the response. In the case of autonomous agents, the delay in response from the LLM can cause a delay in planning the tasks, hence the response generation becomes even slower.
- Money: the cost of token generation by the LLM is quite high, repetitive invocation implies higher expenditures.

Another problem with the interacting of agents, chatbots, and co-pilots that use LLMs is their very slow and costly learning process. This is mainly due to the cost of learning associated with LLMs. Here it is argued that to make an agent learn something it is not mandatory to make the LLM learn or fine-tune.

Currently, there are two types of learning possible for an agent created using an LLM:

### In-context learning

Here, the LLM learns and generates responses based on the given context. Unlike traditional machine learning models that require explicit labels for training, in-context learning leverages the surrounding text or data as implicit supervision. This allows the model to understand the nuances of the conversation or task at hand and generate more relevant and accurate responses. For instance, in a conversation, the model can refer to previous exchanges to maintain the flow and coherence of the dialogue.

In-context learning is the basis for the Retrieval Augmented Generation (RAG). An LLM first retrieves relevant documents or information from a large database based on the given query or context. This retrieved information is then used as additional context for a generative model, which generates the final response. This approach allows the model to leverage the vast amount of information available in the database, while also maintaining the flexibility and creativity of generative models.

The downside of in-context learning is that it is like short-term memory. In-context learning relies heavily on the immediate context. This means that the lessons learned during one session are not remembered for future sessions. The model starts each new conversation session without any knowledge of past sessions, which can limit its ability to build on previous learnings. If the previous conversation is saved, then parsing through all the history becomes a problem itself.

### Fine-tuning

The other end of learning is the fine-tuning. Fine-tuning is a process in machine learning where a pre-trained model, such as an LLM, is further trained on a specific task using a smaller, task-specific dataset. This allows the model to adapt its general knowledge learned from the large pre-training dataset to the specific requirements of the task. In theory, the problem of forgetting the previous conversations mentioned before can be overcome by this method.

However, fine-tuning can be quite expensive. For instance, fine-tuning a model like GPT-3 or GPT-4 can cost tens of thousands of dollars, depending on the size of the model and the number of training steps. This cost includes the computational resources needed for training, which can involve powerful GPUs running for several days or even weeks. Furthermore, fine-tuning requires a considerable amount of task-specific data. If the dataset is too small, the model may overfit the training data and perform poorly on unseen data. Therefore, collecting and curating a large, high-quality dataset for fine-tuning can also be a significant challenge and expense. Furthermore, retraining an ML model is time-consuming, which means that necessary adjustments to the model take too long

To remedy the shortcomings of the above several technique for continuous learning are presented, that enables the agent to store the lessons learned from its previous interactions and use the learned knowledge in future interactions.

The following major problems face the applications developed using LLMs

1. Repetitive invocation of the LLMs makes the application slow and less cost-effective
2. Adding more knowledge to the LLMs (learnability) is expensive and time-consuming

The above problems are already being addressed at different levels. Some researchers are trying to make LLMs smaller and cheaper to execute so that they can be hosted on commodity hardware. Others are identifying mechanisms to enable LLMs to augment their knowledge. As this is a new field so plenty of research is going on in all different directions.

Low-rank adaptation (LoRA) is a technique designed to fine-tune large pre-trained models, such as language models, in a parameter-efficient manner. The core concept of LoRA lies in its ability to update a model's parameters without the need to retrain the entire network, which is computationally expensive and time-consuming. Instead, LoRA introduces low-rank matrices that are smaller in size compared to the full parameter matrices of the model. These low-rank matrices are trained to capture the essential updates required for the new task, and once trained, they are used to modify the original high-dimensional weight matrices of the model. This process allows for significant reductions in the number of parameters that need to be updated, leading to faster and more resource-efficient fine-tuning.

Despite its efficiency, LoRA has some limitations. One of the main shortcomings is the potential for a decrease in performance compared to full model fine-tuning, particularly in tasks that require substantial changes to the model's weights. Additionally, while LoRA reduces the computational resources needed for fine-tuning, it still requires a careful selection of hyperparameters and an understanding of the underlying low-rank structure to be effective. Furthermore, there is a risk of overfitting the fine-tuning dataset, especially if the dataset is small or not representative of the broader task domain. As with any machine learning technique, the success of LoRA-based fine-tuning is highly dependent on the quality and relevance of the data used for training. So a dedicated effort to curate a good dataset remains there. According to a few researchers, LoRA-based fine-tuning is far less in quality as compared to full fine-tuning see for example "LoRA Learns Less and Forgets Less" by Dan Biderman et al. Published in Transactions on Machine Learning Research (08/2024).

Another possibility is Quantization in LLMs, a pivotal technique aimed at reducing the computational and memory demands of these models. It involves the process of constraining the range of values that model parameters can assume, thereby allowing for a more compact representation. This is typically achieved by reducing the precision of the parameters from floating-point to lower-bit integers, which decreases the memory footprint and accelerates computation during inference. For instance, a method like QLLM employs an adaptive channel reassembly technique to mitigate the impact of activation outliers on the quantization range, ensuring a balanced distribution and maintaining efficiency.

However, quantization comes with its own set of challenges. The primary shortcoming is the potential degradation of model performance, particularly in low-bitwidth scenarios. This is due to the reduced precision of the model's parameters, which can lead to a loss in the model's ability to generalize from its training data to new, unseen data. Techniques like QLLM and SmoothQuant aim to address this by introducing strategies to compensate for the performance loss caused by quantization, such as efficient tuning methods or smoothing activation outliers. Despite these advancements, achieving the optimal balance between model size, speed, and accuracy remains a complex and ongoing area of research.

A different approach that might be familiar to the person skilled in the art is Caching, which refers to the storage of frequently accessed data or computational results to expedite future requests. This technique leverages the temporal locality of reference principle, where recently accessed resources are likely to be needed again in the near term. By storing these resources in a cache, which is a faster storage layer, agents, chatbots and co-pilots can quickly retrieve information without reprocessing data, thus enhancing performance and reducing latency. However, caching also has its shortcomings. The primary limitation is the cache coherence problem, where the data in the cache may become outdated if the source data changes, leading to potential inconsistencies. Additionally, managing cache invalidation, determining what data to store, and optimizing cache size to balance memory usage and performance are complex challenges that require careful consideration in the design of LLM applications. These issues necessitate sophisticated algorithms and strategies to ensure that the benefits of caching are realized without compromising data integrity or application responsiveness.

It is therefore the task of the invention to offer a solution to the above-mentioned problems and overcome the named shortcomings.

The problem is solved by a method according to the features of claim 1.

The Problem is further solved by a computer-program product according to the features of claim 13 and a device according to the features of claim 14.

The Computer-implemented method is used for accessing and generating data regarding a complex system, the complex system comprising multiple interacting system elements, with the following steps:

a) Receiving a query for fulfilling a task on the complex system, by a Knowledge Base,
b) Checking whether the same or a similar query has been processed by the Knowledge Base before, and if there is a plan consisting of preprocessed list of suitable actions on the request stored, send a response with the suitable actions,
c) Or else, if available, gather available knowledge about the complex system and/or system elements, for achieving a response to the request,
d) Find a list of suitable actions as a response to the request,
e) Choose the best succession of actions out of the list of suitable actions, and create a plan to fulfill the task,
f) Save the created plan in the Knowledge Base,
g) if the created plan fulfills the query, then send response to query,
h) or else return to step d).

Further embodiments of the invention are specified in the depending claims.

The presented invention solves the problem mentioned by developing a strategy that focuses on two key aspects.

- The first aspect involves the storage of previous experiences and observations in a way that it becomes a knowledge base, so much so, that conclusions can be drawn solely from the knowledge base without even contacting the LLM.
- The second aspect is the implementation of an algorithm that utilizes the knowledge base and the LLM to fulfill user instructions and explore new actions.

This dual-pronged approach ensures that the system is both reactive, in that it can respond to immediate user instructions based on past experiences, and proactive, in that it can explore new actions that may not have been explicitly instructed by the user. In the following sections, both aspects are discussed in detail, explaining how they contribute to the overall functionality of the solution.

The solution can be applied to a variety of system settings. One such application is a co-pilot. This system features a user interface, akin to that of a chatbot, where users can interact directly with the system. This interface typically consists of a dialogue box where users can input their queries or commands in natural language, and the system answers their queries in natural language.

The system has access to dynamic data generated by various machines, stored in the form of a time-series database, that is optimized for storing and analyzing time series such as sensor data. It also has access to documents relevant to these machines. When a user poses a query, the system leverages both the time-series data and the machine-related documents to provide the most accurate response or to execute the user's request to the best of its ability.

Another example of the solution's application is in a robot attached to an AI control system. The AI control system employs the solution to process user commands. The process begins when a user verbally instructs the robot to perform a specific action. The robot has access to sensory data and documents, which it uses in conjunction to achieve the user-specified goal. The AI control system uses the proposed solution to efficiently follow the user commands.

The applicability of the proposed solution is not limited to only the above two scenarios, further examples are presented in the following. These scenarios are presented here to maintain a context in the reader's mind to present the solution effectively. In both scenarios mentioned above and in other situations where the solution is applied, an agent is believed to be interacting with the user. The agent takes the commands from the user and fulfills them using a typical agentic flow algorithm.

The proposed method replaces a typical agentic flow algorithm with the one given below, as common agentic flow algorithms do not take into consideration the knowledge base proposed in the innovation.

The invention is also further elaborated by the figures, whereby it shows

Figure 1    the method according to the state of the art
Figure 2    a scematic image representing the method according to the features of claim 1
Figure 3    an Agent algorithm,
Figure 4    suitable actions within the distance R of the action space
Figure 5    a diagram of the action database.

Figure 2 shows a schematic image, which represents the basic idea of the invention, in comparison to Figure 1, which shows the state of the art, as described in the introduction. Again, there is an Application APP, which can be used by a user or any other system for posing requests, and on the other side the LLM 22 for generating answers to that requests. There is a knowledge base KB, 23 in between. The request 201 could either be answered by the knowledge base directly, 201 or forwarded to the Large Language Model 202.

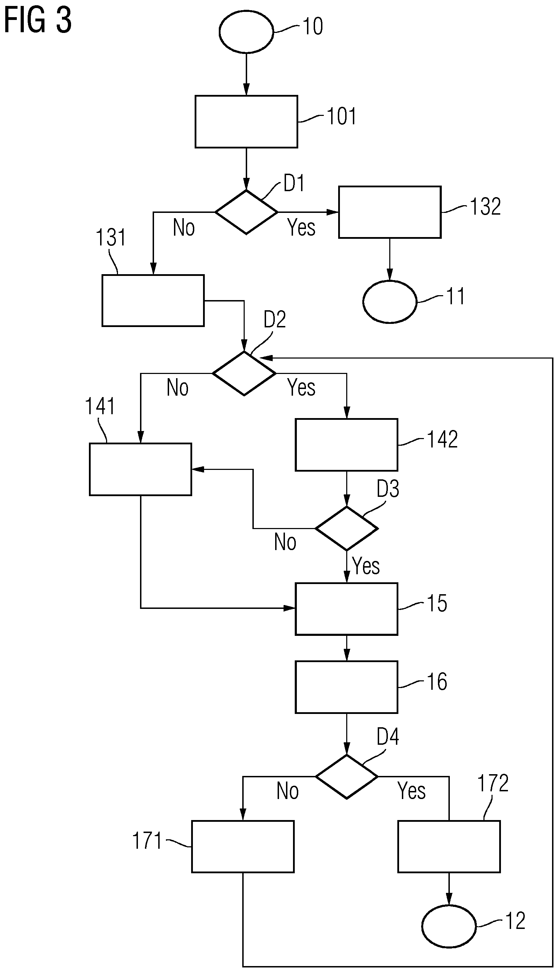

Figure 3 elaborates the agent algorithm that uses the dual-pronged approach to utilize previous experiences to save time and become more responsive. It explores new actions when it cannot find the desired action in the repository. How actions are represented and saved in the repository, will be discussed later.

The process starts when the user gives a task to the agent to fulfill, also called a user's query, 10. The agent first searches the repository to find a similar query 101 that has already been satisfied by the agent. If the agent finds such a request, then it fetches the steps of that query and executes them one by one, 132, to fulfill the command given by the user (positive branch from Decision-1 D1). The case is then closed, 11. If the solution has been deployed for quite some time and the agent has seen many requests from the user, then this path will be chosen more frequently which will allow the system to prepare a response very quickly, as there will be no processing wasted on creating a plan and then reflecting after execution of each action in the plan. A plan here is understood as a sequence of actions. An action is a single step out of a plan, for example "go to the documentation and fetch the temperature".

A distance metric is used to find a similar previous request in the repository. More details on how the distance metric is calculated and how old requests are stored in the repository can be found later. Distance metrics are a key part of several machine learning algorithms and the different possibilities to calculate a distance metric are well known to the person skilled in the art.

The distance metric is measured using the embedding of the request. An embedding is a numeric vector that represents a concept in the "mind" of an LLM.

Standalone models generate the embedding of a natural language sentence. Most models can also generate the embedding if the input is not a natural language sentence but is a piece of software code, or more generally in a formal language. In computer science, formal languages are used, among others, as the basis for defining the grammar of programming languages and formalized versions of subsets of natural languages, in which the words of the language represent concepts that are associated with meanings or semantics. This capability is very useful in the proposed solution.

When the system is deployed afresh, there will be no request to search for in the repository. In that case, the agent takes the negative route from Decision-1, 131. A list of suitable actions is searched within the repository. Please note that previously a similar "request" was searched and now a list of "suitable actions" is searched that can be applied to reach the goal provided by the user. Here again, embeddings of the actions are used to measure the suitability of the actions to the request. How the suitability is calculated comes in the later section.

At this point, the agent is at the state Decision-2, D2. There may be no suitable actions in the repository, for example, when the system has been deployed recently. In that situation a context is built that includes the following and an LLM is consulted to suggest what actions should be taken to achieve the goal provided by the user, 141:

- The Request from the user.
- All information that can be found relevant to the request in the documentation.
- The domain knowledge where the system is deployed.
- Recent history of interaction between the user and the agent.

There is a lot of material already available on how to get the relevant information mentioned above from the perspective of RAG pipelines. Retrieval-Augmented Generation (RAG) is the process of optimizing the output of a large language model, so it references an authoritative knowledge base outside of its training data sources before generating a response.

When the LLM suggests such an action, the action is executed and added to the database. Then the agent checks whether the goal set by the user is achieved or not (state Decision-4), if yes, then the final response from the agent is provided to the user.

If the goal is not achieved, the agent prepares a new list of suitable actions based on the new state of the agent and the control goes back to the state Decision-2.

At the state Decision-2, if there is a list of suitable actions, then the descriptions of all the suitable actions are fetched from the database and the LLM is consulted to choose the best action in that situation. This takes the flow to the state Decision-3. If the LLM suggests that there is no suitable action in the provided list, then the flow goes back to the situation where there were no suitable actions available. This has been discussed in the previous paragraphs.

If at state Decision-3, a suitable action is found, then that action is executed, and it is added to the currently running plan in the database. At the end, at state Decision-4, it is checked whether the goal is achieved or not, if not then the flow goes back to state Decision-2. Otherwise, the final response is generated. When the final response is generated, the final state is added to the currently running plan and the routine ends. Afterward, the agent invokes the above algorithm only when a new request is invoked.

Finding suitable actions:

In the above-mentioned algorithm, the process of finding the list of suitable actions plays an important role. In this section, the process of finding such a list is described.

The list of suitable actions is prepared according to their distance from the request. The distance can be measured using different distance metrics like Euclidean distance, Cosine Similarity, or Manhattan distance. A parameter $R$ is used to filter out all actions that are not suitable. The value of $R$ is specified by the user, and it represents the maximum distance above which all actions will be considered unsuitable. **Fehler! Verweisquelle konnte nicht gefunden werden.** shows a hypothetical action space and how only a subset of actions are selected that lie within the distance $R$ of the user's request.

When the list of suitable actions is sought in a situation where the agent is already executing actions, then one important thing should be considered. A suitable action should not be similar to the action the agent has executed, but it should be similar to an ideal next action that should be executed after the current action.

To understand, assume that there is an instruction given by the user to achieve the goal $G$. To reach a goal $G$, there is an ideal sequence of actions $a_1, a_2, a_3, ..., a_t$ (also called a plan) such that when executed in sequence the goal $G$ is achieved. The action $a_1$ is the first action, while the action $a_t$ is the terminal action, after which no action is executed. Every action $a_i$ has a type $T$. For example, for a robot, some actions move a specific motor in the arm, other moves a motor in the legs, etc. In practice the type of action $a_i$ and $a_{i+1}$ will not be the same. So, in a state where the agent has executed an action $a_i$ it should look for suitable actions that are similar to $a_{i+1}$. The problem is that the sequence $a_1, a_2, a_3, ..., a_t$ is an ideal sequence, and it is still unknown. This means that the agent can only know the type of action that it has just executed and not the one that is coming after it.

To overcome this situation, whenever a goal is reached, the complete sequence of actions is stored in order. This means all actions in the database also have a successor action unless the action is a terminal action. A terminal action is the one that is the last action that takes the agent to the goal $G$.

When an agent is in a state where it has executed an action $a_i$, to get the list of suitable actions, first, all the actions that lie within the distance $R$ are collected. Let us call them a set $A_R$. Afterward, another set $A_{R+1}$ is created that contains the successor action $a_{i+1}$ to each action $a_i \in A_R$. Constructing $A_{R+1}$ is easy by using the repository. Each action $a_i \in A_R$ is searched through the repository and all actions that appear in any completed plan in immediate succession to $a_i$ are added to $A_{R+1}$. After that majority voting is applied to select the type $T$ of the next action $a_{i+1}$, meaning only those actions are kept in $A_{R+1}$ that have the same type $T$ and they are in the majority.

Alternatively, an LLM can be consulted directly to provide the type $T$ of the next action. For example, if a motor in the robotic arm was started the LLM might tell that now it is time to stop that motor and analyze the position of the robot. For that, descriptions of all types are provided to the LLM along with the description of the current state of the agent and LLM is consulted on which type of action should be executed next. It is the same as providing LLM with the current plan and asking the LLM to suggest the next step in the currently running plan.

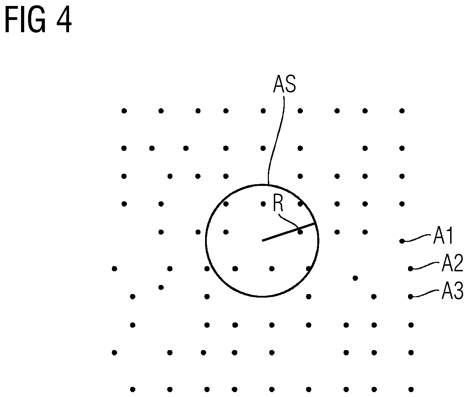

Once the type of next action is known the transformation matrix must be applied to $a_i$ to get an estimate of $a_{i+1}$. How a transformation matrix is calculated is discussed in the next section. Here it is sufficient to mention that when we have a transformation matrix that maps an action space $S_1$ of type $T_1$ to another action space $S_2$ of type $T_2$ then we can apply such a transformation matrix $M_{12}$ to project the embedding vector of action in $S_1$ to $S_2$, ( $S_1 \xrightarrow{M_{12}} S_2$ ). Applying the transformation $M$ on $a_i$, gives an estimate of $a_{i+1}$, but it does not give an action that is present in the repository. However, the estimate is good enough to apply the same method of choosing an action from the repository that is shown in Figure 4. Consequently, candidates for the next action $a_{i+1}$ are given to the LLM as shots (examples), to let the LLM suggest the best next action.

It is important to mention that research shows that the response accuracy of an LLM can be improved by a factor of 2 if relevant shots(examples) are provided in the context. The above methodology is designed to provide the most relevant examples to the LLM, to get the best next action $a_{i+1}$.

**Calculating transformation matrices**

As mentioned earlier, transformation matrices play a key role in calculating the similarities between action spaces. To understand them properly, a few basic concepts are important. Each action $a$ in the proposed solution has a type $T$. These types create disjoint sets of actions. In real life, for a robot control system, all actions starting a motor could be put in one type, while actions stopping them could be put in another. In the same way, all actions that require getting data from a specific sensor could be put in one type, while actions requiring to get data from another sensor could be put in another type.

For a chatbot that must interact with the user verbally, actions that perform operations on static data can be of one type, while actions related to code generation to transform dynamic data can be associated with another type.

The embeddings of the actions of a certain type create a vector space $S$. For each type $T$, there is a separate action space. Although the actions in each space are disjoint, they are related to each other by the purpose of their creation. Actions that are executed in a sequence to reach a goal $G$ are related to each other by their purpose of creation. Because the creation of embeddings of each action takes into consideration their end goal, so actions targeted to one goal have a transformation operator that can transform the embedding of one action from its space to the embedding of another space. This means that if we know that there are two actions to be applied to reach a goal $G$ and both actions are already present in the database, then if we can identify one action $a_i$, then we can also calculate the other action by applying the corresponding transforma-

tion $M_{ij}$ to $a_i$. Because embeddings are noisy, the transformation will not give the exact action, but the transformed action will not be far from the desired action, this is why the method shown in Figure 3 is used.

Now calculating the transformation $M_{ij}$ that maps action in $S_i$ to $S_j$ remains a simple parameter estimation problem. The simplest possible option is to use linear transformation. Here assume that there is an action space $S_1$ and another action space $S_2$, and a transformation $M_{12}$ is sought such that $M_{12}. S_1 = S_2$. With only a few hundred samples in $S_1$ and $S_2$, the least square method is applied to get a reasonably accurate transformation $M_{12}$. Other more sophisticated methods can also be used to calculate $M$, but practice shows that actions of closed systems are linearly associated with each other, so the least squares method is a good choice in the given scenario. Especially, when the purpose is not to get to the exact embedding of the target action, but to just lie close enough to the ideal action so it appears in the search.

It should be noted that to transform an action space $S_i$ to $S_j$ there will be a unique transformation matrix $M_{ij}$. Although it is not difficult to calculate the transformation matrices that correspond to all pairs of action spaces, they are not needed. Only those transformation matrices are needed whose actions space come in direct succession. The following process of calculating all required transformation matrices can be executed periodically. The period can be chosen by the user according to the specific application.

1. Gather all actions that are part of successful plans
2. Put all actions in respective sets according to their types
3. Find all the pairs of predecessor and successor types $(S_i, S_j)$
4. Choose a few hundred "best sample actions" in both $S_i$ and $S_j$
5. Calculate $M_{ij}$ for each pair $(S_i, S_j)$

Although the description of the above algorithm seems lengthy, however smart storage of actions concerning their types can make things very fast and simple. In the next section, such a table named **Action-Action-Map** is described in detail. Moreover, the "best sample actions" in the above algorithm are the ones that appear in the highest-ranking plans. In the next section, more details on plans, their ranking, and actions are coming.

**Knowledge representation and distillation**

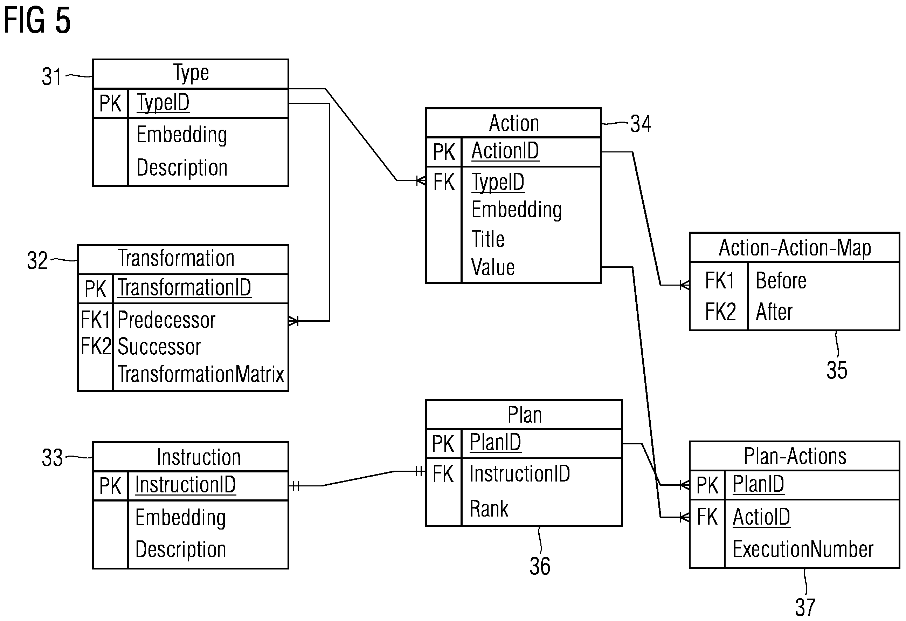

From the discussion in the previous sections, it is clear that the solution revolves around actions, their sequences that take the agent to a goal, and their embeddings. The sequence of actions is called a plan. The diagram in Figure 5 shows how the previous experiences are stored in the database. The storage is tightly coupled to the algorithm in 3.

The relation named **Type,** 31, contains the unique identifiers, descriptions, and embeddings of all types of actions, for example, actions related to static documents or code generation. The central relation is the **Action** table, 34. It contains the embedding and the title of the action. Embedding is used for transformation and similarity while the title is a brief description of the action that is used to provide to the LLM so the LLM can choose the best action. The table **Action-Action-Map,** 35, is also a key table that stores which action was executed after an action. This table is used to identify the next possible action after executing an action. In both fields **Before** and **After** Action IDs are stored.

The table **Action-Action-Map,** 35 is also used for the calculation of transformation matrices. The embeddings of the actions appearing in the field **Before** belonging to the same type form the vector space $S_1$, and the embeddings of the actions appearing in the field **After** belonging to the same type form the vector space $S_2$. A simple query can bring all the required embeddings and the respective transformation matrix can be calculated using it.

The table named **Instruction,** 33, stores all the instructions/questions provided by the user. The table **Plan,** 36, tracks which plan was executed to reach the goal prescribed by an instruction in the **Instruction** table, 33. The field named **Rank** plays an important role in identifying the best plans for one instruction. The field **Rank** is an important aspect of the solution that stores the user feedback to let the system know which plans generated the best answer. The field is used to identify the plans that should be removed from the system.

The table **Plan-Actions,** 37, stores which actions were part of the sequence to reach the goal defined by an instruction in the **Instruction** table, 33. The field named **ExecutionNumber** preserves the order of actions.

The table **Transformation, 32,** stores all the transformation matrices $M_{ij}$ that transform the actions of the type predecessor to the type successor.

The database may seem like a repository but coupled with the algorithm described in Figure 3 the repository becomes a knowledge base where the **distilled knowledge of the system** is present and can be accessed whenever needed. Moreover, if the domain where the agent is working changes. For example, when working with an autonomous robot, a part of the robot is changed and the documentation covering that part also changes. In such a case, the repository keeps reflecting the old knowledge but user feedback can quickly fix that. Whenever the proposed solution brings a wrong answer (response) to a previously stored question (instruction), the user can give it a bad rank, forcing the associated plan to drop its ranking and eventually get out of the system.

A similar procedure is working for an action whose definition has been changed to reflect the change in the domain of the agent. All such actions that point to old knowledge will cause the plan they appear in to get bad user feedback. That will take all such plans out of the system along with the actions including that plan. For more on this see the next section.

**Replacement strategy**

As we are storing the information in the database, there must be a strategy to get the unwanted data out. Data removal cannot be started before there are records more than the required number of records. The minimum number of records in practice is observed to be not more than 500, as with modern embedding models this number of records is sufficient to calculate the transformation matrices. The following method is used to remove records.

1. Identify all plans that have the lowest rank, let us call them bad plans.
2. Identify all actions used in the list of bad plans.
3. Remove the bad plans from the **Plan-Action** table and the **Plan** table.
4. Remove all actions from the **Action** table that were in the bad plans list and were not used elsewhere.
5. Remove all entries from the **Action-Action-Map** table that belong to actions from the above step.
6. Remove all instructions that do not have an associated plan in the **Plan** table.

Nothing will be deleted from the **Transformation** table, as ideally there is no harm in storing the transformations of all possible pairs of types. Because transformations are to be updated periodically, so effect of the above will be reflected in the transformations.

**Ideal system state**

The goal of the system is to populate the plans for all possible instructions which would eventually eliminate the need to ask LLM to generate any plan or actions. At this stage, the system will become self-sufficient and can respond to the user's instructions even without the help of an external LLM. This will only change if there is a new instruction (question) or the domain knowledge of the system changes. These situations are already discussed in the last two sections.

As mentioned earlier the proposed solution is not merely a storage of previous actions and plans, but rather it is a continuous learning system, where user feedback plays a pivotal role. Moreover, an external LLM is used to make the system better which acts as a supervisor and enables the system to run on its own with time.

The learning process is started after a fixed number of user interactions. This number does not have to be in thousands, but a few hundred new interactions can make the system better than before. For every answer or response presented to the user, user feedback is required. This feedback plays a fundamental role in providing results from the storage that establishes the basis of learning in the system. The following are a few important points where the use of feedback is incorporated to enable the system to improve over time

- **Plans:** In the database, there can be multiple variations of the same instruction or a query from the user. For each variation, there can be a separate plan. The user can provide feedback to each response. When there is a semantic match (cosine similarity) of the user's instruction with an instruction already available in the **Plan** table, the highest-ranking plan is picked for execution. Actions and plans that perform poorly are removed from the database.
- **Transformation matrices:** To calculate the transformation matrices only a few hundred actions are required. If there are more than the required actions in the database, only the actions appearing in high-ranking plans are kept. After the removal of poorly performing plans and actions, the periodic update of transformation matrices reflects the system state biased toward high-ranking plans.
- **Action selection:** While selecting the actions that lie within the distance R actions that appear in a high-ranking plan are given priority.

Apart from the learning based on the user feedback, whenever there is not an exact match the system consults the LLM to generate one or more actions that are not present in the repository. The action generated by the LLM remains in the database. This is the **knowledge distillation** process of the system. Here the source of the knowledge is the documents and user-feedback and the distilled knowledge is stored in the repository in the form of actions, while the LLM acts like an expert.

More Examples for the use of the proposed method and device are elaborated in the following.

Example 1: Suppose there is an electronically monitored boiler. The sensor devices attached to the boiler monitor different aspects of the boiler, including its temperature and the pressure exerted by the boiling material on the walls of the boiler. An expert user, familiar with different aspects of the boiler through their experience, asks, "Is the boiler temperature within the prescribed threshold boundaries?" The agent does the following to answer the question:

- The agent first checks the temperature of the boiler from the data being generated by the sensors.

- Then the agent searches for the documentation of the boiler.

- The agent checks the prescribed temperature boundaries of the boiler from the documentation.

- The agent matches the prescribed temperature boundary with the actual temperature and tells whether the temperature is within the threshold or not.

Suppose the agent could not find the correct documentation, so it does not reach the correct boundary threshold. Due to this, the agent provides a wrong answer. The experienced user gives negative feedback to this question, and consequently, this feedback and the sequence of actions (plan) are saved in the cache. Because negative feedback is attached to this plan, if any user asks the same question again, this plan will not be used.

Suppose the same user asks the same question again. This time, the agent reaches the correct documentation and fetches the right boundaries, so it provides the correct answer. As the user is experienced, they provide positive feedback to the answer. The plan with positive feedback will be saved in the cache and will be used whenever the same question is asked, guaranteeing not repeating the mistake and providing a correct answer much more quickly. This will be especially beneficial for an inexperienced user who does not know the correct answer.

In the future, if the experienced user delegates the responsibility to an inexperienced user, the agent is guaranteed to provide correct answers as it has implicitly distilled the knowledge of the experienced user and saved it in the cache. This example illustrates how the proposed system can learn from the knowledge of the experienced user seamlessly, allowing inexperienced users to benefit from the knowledge of the experienced user through the agent.

Example 2: Suppose there is a medical researcher who has been taking help from a chatbot for some time in their research on medicine. The typical questions asked are related to finding research articles relevant to drug discovery from the web and summarizing them. Because the researcher uses the chatbot regularly, the agent saves the feedback from the researcher in the proposed cache.

One day, the researcher asks a question that was not asked before, and there is no similar question in the cache database that the agent could follow. The agent asks the LLM to generate a plan to fulfill the request. The agent presents similar examples of previous plans from the cache to the LLM. When the agent executes the plan, it also refines the plan based on the provided examples. At each step of the plan, the agent presents similar actions from the cache database as examples. Due to this, the refined plan generated by the LLM is always influenced by the implicit bias of the researcher. For example, when the agent asks to fetch documents from the web, it would present sources that were used in similar previous actions. This will induce a bias in the response of the LLM, and the LLM will present sources that are similar to the given examples. If the sources in the cache database are related to a certain drug that the researcher was working on, then it is highly likely that the sources suggested by the LLM would also be related to that topic. Note that only similar actions are presented to the LLM, meaning only those examples will be presented to the LLM that are similar to the currently asked question, otherwise, if there are no similarities then no examples will be presented to the LLM. In this way, the agent has learned the knowledge base of the researcher over time and presents relevant material to them without the need to create that insight explicitly.

Example 3: In a predictive maintenance system, an agent is utilized to identify patterns that may harm machinery. When such a request is received, the agent follows these steps:

1. The agent first identifies the boundary of an anomalous signal.
2. The agent then clips the signal at the identified boundary.
3. Next, the agent selects certain transformations to perform on the signal to extract its characteristics.
4. These characteristics are then analyzed to decide whether to raise an alarm.

However, suppose there are false alarms raised by the agent due to the selection of incorrect transformations. Each time a false alarm is raised, the user provides negative feedback. This feedback is saved in the proposed cache along with the transformations that led to the false alarm.

This information can be used to improve the LLM's response by providing negative examples to the LLM when encountering a similar signal. The negative examples will be provided in step three, prompting the LLM to reconsider the type of transformations, as the previously selected transformations resulted in a false alarm. If this time agent does not raise a false alarm or a correct alarm is raised then this will also be saved in the cache along with the positive feedback. This continuous feedback loop will enable the agent to develop insights similar to those of an experienced user, who can identify anomalies by merely observing the data stream. Through this iterative process, the system becomes more adept at accurately identifying harmful patterns and reducing the occurrence of false alarms.

**Claims**

1. Computer-implemented method for accessing data regarding a complex system (SYS), the complex system comprising multiple interacting system elements (SE1, SE2, SEn), with the following steps:

   i) Receiving a query for fulfilling a task on the complex system (SYS), by a Knowledge Base (KB)
   j) Checking whether the same or a similar query has been processed by the Knowledge Base (KB) before (101) and if there is a plan consisting of preprocessed list of suitable actions on the request stored, send a response (11) with the suitable actions,

k) Or else, if available, gather available knowledge about the complex system (SYS) and/or system elements (SE1, SE2, SEn), for achieving a response to the request,

l) Find a list of suitable actions as a response to the request, (131),

m) Choose the best succession of actions out of the list of suitable actions, and create a plan to fulfill the task, (16)

n) Save the created plan in the Knowledge Base (KB),

o) if the created plan fulfills the query, then send response to query, (172)

p) or else return to step d).

2. Computer-implemented method according to claim 1, **characterized in that** at least part of the data is generated by at least one of the elements in the complex system.

3. Computer-implemented method according to claim 1 or 2, **characterized in that** at least part of the data consists of documents related to at least one of the system elements, in particular documents containing descriptions of the at least one system element.

4. Computer-implemented method according to one of the preceding claims, **characterized in that** the Knowledge Base (KB) contains data that is collected and stored in in the form of a time series database, wherein there are stored relations regarding Actions (34), dependencies of Actions (35) and Transformations (32).

5. Computer-implemented method according to one of the preceding claims, **characterized in that** for step b) the similarity of a query is calculated using a distance metric based on an embedding of the request.

6. Computer-implemented method according to one of the preceding claims, **characterized in that** the request is formulated in a formal language.

7. Computer-implemented method according to one of the preceding claims, **characterized in that** the available knowledge collected in step c) comprises information about

- The sender of the request,
- a history of interactions with the sender of the request,
- The system or the interacting system elements, in particular technical documentation,

- The domain, where the system is deployed.

8. Computer-implemented method according to one of the preceding claims, **characterized in that** in step d) the finding a suitable action (A1, A2, ...), is performed by a Large Language Model (LLM) wherein the possible actions are grouped according to their distance from the request and only those actions (A5) are deemed suitable that are within a certain distance (R ) from the request.

9. Computer-implemented method according to one of the preceding claims, **characterized in that** having one suitable action, it is searched in the Knowledge Base for an already stored plan containing the certain action, selecting the action that is in direct succession in the plan as a suitable next action that has been used in the stored plan.

10. Computer-implemented method according to one of the preceding claims, **characterized in that** in the Knowledge Base (KB) also a feedback information is stored, on the degree of correspondence of the generated plan found on the request.

11. Computer-implemented method according to one of the preceding claims, **characterized in that** an action has a certain type, and actions of the same type create a vector space.

12. Computer-implemented method according to one of the preceding claims, **characterized in that** the complex system is a technical system, in particular a robot, and an action is manipulating one part of the technical system, in particular moving or administrating or maintenance.

13. Computer Program Product suitable for executing the steps of the method according to the features of one of claims 1 to 12.

14. Knowledge Base Device (KB) for accessing data regarding a complex system (SYS), the complex system (SYS) comprising multiple interacting system elements, (SE1, SE2, SEn), wherein the device offers the following functional units:

q) Receiver for Receiving a query for fulfilling a task on the complex system,

r) Processor for Calculating whether the same or a similar query has been processed by the Knowledge Base (KB) before (101) and if there is a plan consisting of preprocessed list of suitable actions on the request stored, Sender to send a response (11) with the suitable actions,

s) Or else, if available, gathering available knowledge about the complex system (SYS) and/or system elements (SE1, SE2, SEn), for achieving a response to the request,

t) Finding a list of suitable actions as a response to the request, (131),

u) Choosing the best succession of actions out of the list of suitable actions, and create a plan to fulfill the task, (16)

v) Memory for saving the created plan in the Knowledge Base (KB),

w) Sender for sending a response to the query, if the created plan fulfills the query, (172).

15. Device (KB) according to claim 14, **characterized in that** at least part of the data is generated by at least one of the elements in the complex system.

16. Device (KB) according to claim 14 or 15, **characterized in that** at least part of the data consists of documents related to at least one of the system elements, in particular documents containing descriptions of the at least one system element.

17. Device (KB) according to one of the preceding claims 14 to 16, **characterized in that** the Knowledge Base (KB) contains data that is collected and stored in in the form of a time series database, wherein there are stored relations regarding Actions (34), dependencies of Actions (35) and Transformations (32).

18. Device (KB) according to one of the preceding claims 14 to 17, **characterized in that** the processor is able to calculate the similarity of a query using a distance metric based on an embedding of the request.

19. Device (KB) according to one of the preceding claims 14 to 18, **characterized in that** the request is formulated in a formal language.

20. Device (KB) according to one of the preceding claims 14 to 19, **characterized in that** the available knowledge collected comprises information about

- The sender of the request,
- a history of interactions with the sender of the request,
- The system or the interacting system elements, in particular technical documentation,
- The domain, where the system is deployed.

21. Device (KB) according to one of the preceding claims 14 to 20, **characterized in that** the processor is set up and able to find at least a suitable action (A1, A2, ...), by using a Large Language Model (LLM) wherein the possible actions are grouped according to their distance from the request and only those actions (A5) are deemed suitable that are within a certain distance (R ) from the request.

22. Device (KB) according to one of the preceding claims 14 to 21, **characterized in that** having one suitable action, the Processor is able and set up to search in the Knowledge Base for an already stored plan containing the certain action, selecting the action that is in direct succession in the plan as a suitable next action that has been used in the stored plan.

23. Device (KB) according to one of the preceding claims 14 to 22, **characterized in that** the memory of the Device is also able and set up to store a feedback about the degree of match of the generated plan and the request made.

24. Device (KB) according to one of the preceding claims 14 to 23, **characterized in that** an action has a certain type, and actions of the same type create a vector space.

25. Device (KB) according to one of the preceding claims 14 to 24, **characterized in that** the complex system is a technical system, in particular a robot, and an action is manipulating one part of the technical system, in particular moving or administrating or maintenance.

FIG 1

FIG 2

FIG 3

# FIG 4

# FIG 5

31 — **Type**

| PK | TypeID |
|----|--------|
| | Embedding |
| | Description |

32 — **Transformation**

| PK | TransformationID |
|----|------------------|
| FK1 | Predecessor |
| FK2 | Successor |
| | TransformationMatrix |

33 — **Instruction**

| PK | InstructionID |
|----|---------------|
| | Embedding |
| | Description |

34 — **Action**

| PK | ActionID |
|----|----------|
| FK | TypeID |
| | Embedding |
| | Title |
| | Value |

**Plan**

| PK | PlanID |
|----|--------|
| FK | InstructionID |
| | Rank |

36

**Action-Action-Map**

| FK1 | Before |
|-----|--------|
| FK2 | After |

35

**Plan-Actions**

| PK | PlanID |
|----|--------|
| FK | ActioID |
| | ExecutionNumber |

37

EP 4 742 097 A1

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EVAN KING ET AL: "Sasha: creative goal-oriented reasoning in smart homes with large language models", ARXIV.ORG, CORNELL UNIVERSITY LIBRARY, 201 OLIN LIBRARY CORNELL UNIVERSITY ITHACA, NY 14853, 16 May 2023 (2023-05-16), XP091510750, * abstract; Sections 1, 3-7; figures 1, 3-5, 15, 20; table 1 * | 1-25 | INV. G06N3/045 |
| X | CN 118 520 072 A (BEIJING JINGDONG TUOXIAN TECH CO LTD) 20 August 2024 (2024-08-20) * page 1 - page 20 * | 1-25 | |
| A | YONG QI ET AL: "Safety Control of Service Robots with LLMs and Embodied Knowledge Graphs", ARXIV.ORG, CORNELL UNIVERSITY LIBRARY, 201 OLIN LIBRARY CORNELL UNIVERSITY ITHACA, NY 14853, 28 May 2024 (2024-05-28), XP091770266, * page 1 - page 14; figures 3, 4 * | 1-25 | |
| A | LIN KEVIN ET AL: "Text2Motion: from natural language instructions to feasible plans", AUTONOMOUS ROBOTS, [Online] vol. 47, no. 8, 14 November 2023 (2023-11-14), pages 1345-1365, XP093164579, NL ISSN: 0929-5593, DOI: 10.1007/s10514-023-10131-7 Retrieved from the Internet: URL:https://link.springer.com/content/pdf/10.1007/s10514-023-10131-7.pdf> * abstact; Sections 1-9; figures 1-4 * | 1-25 | TECHNICAL FIELDS SEARCHED (IPC) G06N |

-/--

The present search report has been drawn up for all claims

| Place of search | Date of completion of the search | Examiner |
|---|---|---|
| The Hague | 23 April 2025 | Klasen, TJ |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

## EUROPEAN SEARCH REPORT

Application Number

EP 24 21 1437

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LI KANXUE ET AL: "Alleviating Action Hallucination for LLM-based Embodied Agents via Inner and Outer Alignment", 2024 7TH INTERNATIONAL CONFERENCE ON PATTERN RECOGNITION AND ARTIFICIAL INTELLIGENCE (PRAI), IEEE, 15 August 2024 (2024-08-15), pages 613-621, XP034797201, DOI: 10.1109/PRAI62207.2024.10826957 [retrieved on 2025-01-14] * page 613 - page 620; figures 1, 2 * | 1-25 | |

TECHNICAL FIELDS
SEARCHED     (IPC)

The present search report has been drawn up for all claims

| Place of search | Date of completion of the search | Examiner |
|---|---|---|
| The Hague | 23 April 2025 | Klasen, TJ |

EPO FORM 1503 03.82 (P04C01)

page 2 of 2

## ANNEX TO THE EUROPEAN SEARCH REPORT
## ON EUROPEAN PATENT APPLICATION NO.

**EP 24 21 1437**

This annex lists the patent family members relating to the patent documents cited in the above-mentioned European search report.
The members are as contained in the European Patent Office EDP file on
The European Patent Office is in no way liable for these particulars which are merely given for the purpose of information.

**23-04-2025**

| Patent document cited in search report | Publication date | Patent family member(s) | Publication date |
|---|---|---|---|
| CN 118520072 A | 20-08-2024 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **DAN BIDERMAN et al.** LoRA Learns Less and Forgets Less. *Transactions on Machine Learning Research*, August 2024